# EUROPEAN PATENT SPECIFICATION

(11) **EP 2 661 574 B1**
(45) Date of publication and mention of the grant of the patent: **04.03.2015**
(21) Application number: 11791710.4
(22) Date of filing: 18.11.2011
(51) Int. Cl.: F16K 37/00

(54) **VALVE CONTROLLER AUTOMATIC CALIBRATION WITHOUT USER INTERFACE**
AUTOMATISCHE KALIBRIERUNG EINER VENTILSTEUERUNGSEINHEIT OHNE ANZEIGEVORRICHTUNG
ÉTALONNAGE AUTOMATIQUE D'UN CONTRÔLEUR DE SOUPAPE SANS INTERFACE-UTILISATEUR

(30) Priority: 05.01.2011 US 984658
(43) Date of publication of application: 13.11.2013
(73) Proprietor: Fisher Controls International LLC, Marshalltown, IA 50158 (US)
(72) Inventor: PATHAK, Saurabh, Singapore 658880 (SG); LIU, Yi, Jun, Singapore 680514 (SG)
(74) Representative: Leske, Thomas
(86) International application number: PCT/US2011/061460
(87) International publication number: WO 2012/094065

(56) References cited:
- EP-A2- 0 793 155
- WO-A1-99/17042
- US-A1- 2008 163 936

## Description

### BACKGROUND

A valve controller is used to convert a control signal into a specific valve position. The valve controller may determine the value of the control signal within the range of possible values and use an algorithm to set the valve accordingly. The algorithm may be a straight proportion or may have a non-linear characteristic based on the particular valve controller and programming. The valve controller may set the valve anywhere between fully open and fully closed.

During installation and at other times in the life of the valve and valve controller, the valve controller may be calibrated with respect to the travel of the valve itself. Calibration of the valve controller requires use of either a built-in user interface or a calibration tool. However, a built-in user interface adds cost to the valve controller for an infrequently-used process. In some installations, connection of the calibration tool to the valve controller may be physically difficult, or in other cases a technician may want to calibrate the valve controller and discover the calibration tool is not at hand.

WO 99/17042 A1 describes a diagnostic test unit for deterministically measuring one or more parameters, such as dead band, dead time, response time, gain, or overshoot, of a process control device that is connected in a process control loop during operation of a process and which includes a switch controller, a signal generator, a switch, a response accumulator mechanism, and an analyzer mechanism. The switch controller monitors a process to determine whether the process signal is substantially stable. In the event that the process signal is substantially stable, the switch replaces a control signal with a diagnostic test signal generated by the signal generator. The response accumulator is in communication with the process control loop to obtain an indication of the response of the process control device to the diagnostic test signal. The analyzer unit then determines the device parameter from the test signal and the response indication.

US 2008/163936 A1 is concerned with valve positioning systems that may include one or more components and a controller. The components may include one or more electric-to-pressure output converters, relay, gas supplies, and/or actuators. A controller may adjust a position of a valve by sending a signal. The valve positioning system may individually monitor components and determine the condition of each component being individually monitored. The valve positioning system may determine if a component will fail prior to failure and/or determine if a problem will occur in a component prior to the problem occurring.

EP 0 793 155 A2 describes a method for determining the performance of a control valve in a closed control loop by using a simulation model. A simulation model of a process control loop is provided, consisting of a unit process including the flow equation of the valve, a process controller and a process transmitter, to simulate a process with disturbances. The simulation model is connected to a real control valve, including a valve, an actuator and a positioner. The valve response is measured. The process variability during the process is determined.

### SUMMARY

A method of performing a self-calibration routine in a valve controller according to claim 1, a valve controller according to claim 9 and a method of operating the valve controller according to claim 15 of the present invention are described.

A valve controller may test one or more signal contacts for an indication that an automatic self-calibration routine should be initiated. In one embodiment, auxiliary terminals, for example, terminals alternately used for event inputs, may be used to activate the self-calibration routine. The valve controller may then calibrate itself using internal routines and the valve and/or actuator stops as the 0% and 100% calibration points. Self calibration may also include pressure ranging and travel performance tuning.

The valve controller may have a processor or other controller that can store a setting related to the use of the auxiliary terminals using a register or non-volatile memory. The setting may be checked when the valve controller is activated, or may be polled during operation to see if a change to the setting has been made. When programmed for event inputs, a signal or impedance change applied to the terminals may trigger an interrupt or set a flag, that when polled, causes the processor to send an alert to an external process manager or similar device.

When programmed for self-calibration a signal or impedance change applied to the terminals may cause the processor to enter the self-calibration routine, The setting for mode may be verified or changed locally using a field programming tool or may be verified or set via a remote device such as the external process manager through a network connection, for example, a HART, Profibus or other protocol network.

The valve controller may use a timer to determine a time range for activating the self-calibration mode. For example, when a short circuit is applied to the terminals, the valve controller may take steps to ensure that the short circuit is not accidental, such as might occur when installing or removing a cover. The short circuit, or other signal, may cause a timer to start. The short circuit must be removed within a predetermined time period in order to meet the criteria for entering the self-calibration mode. For example, only a short circuit applied for a period of 3-5 seconds may cause activation of the self-test mode. Obviously, other time periods may be programmed.

Instead of a short circuit, a signal may be applied to cause the self-calibration mode. The signal may be a tone of a given frequency, a predetermined voltage, etc.

The predetermined time period for which the short circuit or other signal must be applied may also be programmable. In some cases, the predetermined time period may be reduced when, for example, frequent calibration may be anticipated. In other cases, the predetermined time period may be lengthened, for example, if some likelihood for intermittent shorting of the auxiliary terminals may be present.

No separate user interface on the valve controller is required, nor is connection of an external field calibration tool. Self calibration can be canceled by a second indication, such as a brief shorting of the electrical contacts.

### BRIEF DESCRIPTION OF THE DRAWINGS

Fig. 1 is a simplified and representative block diagram of a valve controller;
Fig. 2 is a view of representative electrical connections in a valve controller;
Fig. 3 is an illustration of a method of initiating a self-calibration routine in a valve controller;

### DETAILED DESCRIPTION

Although the following text sets forth a detailed description of numerous different embodiments, it should be understood that the legal scope of the description is defined by the words of the claims set forth at the end of this disclosure. The detailed description is to be construed as exemplary only and does not describe every possible embodiment since describing every possible embodiment would be impractical, if not impossible. Numerous alternative embodiments could be implemented, using either current technology or technology developed after the filing date of this patent, which would still fall within the scope of the claims.

It should also be understood that, unless a term is expressly defined in this patent using the sentence "As used herein, the term '_' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term by limited, by implication or otherwise, to that single meaning. Finally, unless a claim element is defined by reciting the word "means" and a function without the recital of any structure, it is not intended that the scope of any claim element be interpreted based on the application of 35 U.S.C. § 112, sixth paragraph.

Much of the inventive functionality and many of the inventive principles are best implemented with or in software programs or instructions and integrated circuits (ICs) such as application specific ICs. It is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation. Therefore, in the interest of brevity and minimization of any risk of obscuring the principles and concepts in accordance to the present invention, further discussion of such software and ICs, if any, will be limited to the essentials with respect to the principles and concepts of the preferred embodiments.

Valve controllers are often integrally constructed with the valves they control and may arrive at a field installation already calibrated for analog input current, pressure sensors, and travel calibration. However, in the course of setup or operation, one or more areas may require re-calibration.

Recalibration may require use of portable test equipment. In one embodiment, the test equipment may be a 475 Field Communicator, available from Emerson Process Management. However, the use of such portable test equipment may not always be convenient.

Many valve controllers provide auxiliary terminals that may be coupled to an external sensor. The valve controller may post an alert when the external sensor is activated. A valve controller below may allow the auxiliary terminals to be selectively programmed so that providing a signal to the auxiliary terminals, such as a short circuit between two terminals of the auxiliary input for a specified period, will cause the valve controller to begin a self-calibration routine.

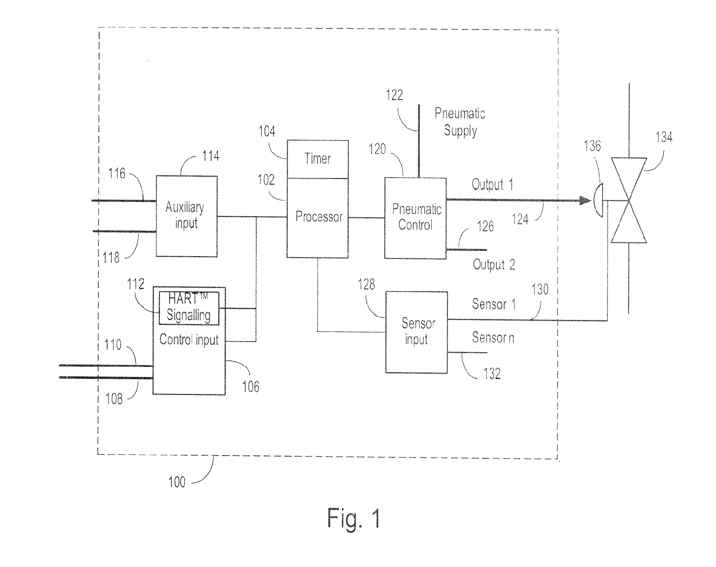

Fig. 1, a simplified and representative block diagram of a valve controller 100. The valve controller 100 may include a processor 102. The processor 102 may be an ASIC circuit, a microcomputer, or another hardware/firmware device capable of performing sequential steps or routines to accomplish the valve controller functions. A timer 104 may be integral to the processor 102 or maybe a standalone clock/timer circuit. The processor 102 may be able to start and stop the timer 104 or, the timer may be free running and the controller may time intervals by noting specific timer values and calculating a time interval.

The valve controller 100 may also include a control input 106 with control input lines 108 and 110, for example. A variety of control input signals may be supported, once such exemplary signaling scheme is a 4-20 mA current loop (4-20 mA) control signal, well known in the industry. The valve controller 100 may use the 4-20 mA control signal to proportionally control the actual valve setting. In addition to the 4-20 mA control signal, a Highway Addressable Remote Transducer (HART™) protocol signal may be superimposed on the control input signals to allow it diagnostic, maintenance, and additional process data to be communicated to the valve controller 100 via a HART signaling interface 112.

The signal input circuit 114 may include signal input terminals 116 and 118. In some embodiments, the signal input terminals 116 and 118 may be directly coupled to the processor 102, but in other cases the signal input circuit 114 may provide biasing, input transient protection, or both.

A pneumatic control 128 be used to regulate the flow of pressurized fluid, such as a gas, from a pneumatic input 122 to a pneumatic output 124. Some embodiments may use a second pneumatic output 126 depending on the type of valve being controlled. For example, some valves use a single pressure input to move a valve actuator that has a spring or other return mechanism. Other valves may use two pressure inputs to move the valve actuator in opposite directions.

A sensor input 128 may be coupled to one or more sensor inputs 130 and 132. The sensor input 128 may provide feedback to the processor as to the actual position of an actuator or the valve itself.

Also illustrated in Fig. 1 but not part of the valve controller 100 is an exemplary valve 134 showing actuator 136 and connections to the pneumatic control 120 and sensor input 128. As is known, movement of the actuator 136 causes corresponding movement of the valve disk or other flow control mechanism (not depicted).

In operation, a 4-20 mA control signal may be received on control input lines 108 and 110. The control signal may be interpreted at the control input 106 and reported to the processor 102. Responsive to the control signal, the processor 102 may cause the pneumatic control 122 to move the actuator 136 by changing the pressure at output 124, until the actuator 136 or valve mechanism reaches a desired position as reported by the sensor input 128.

The auxiliary input 114 be a designated input programmable to different functions. When programmed in a first mode as an alert input or alarm input, placing a signal or causing an impedance change across input terminals 116 and 118 may cause the signal input circuit 114 to notify the processor 102 that an event has occurred or some external condition exists. The processor 102 may then respond according to its programming to respond to the event, for example, by sending a notification to a process controller via the HART signaling interface 112.

When programmed in a second mode as a self-calibration input, placing a signal or causing an impedance change across input terminals 116 and 118 may cause the signal input circuit to notify the processor 102 that a signal is present. The processor 102 may then respond to initiate a self-calibration routine for valve travel calibration by moving the actuator 136 to a first calibration point, that is, a first limit of valve travel, at one end of the available actuator travel and then a second calibration point, that is, a second limit of valve travel, at the other end of the available actuator travel so that the full travel of the actuator 136 or corresponding valve mechanism may be determined. When the limits of travel have been completed, a first control signal limit value may be resolved and set for the first calibration point and a second control signal limit value may be resolved and set for the second calibration point.

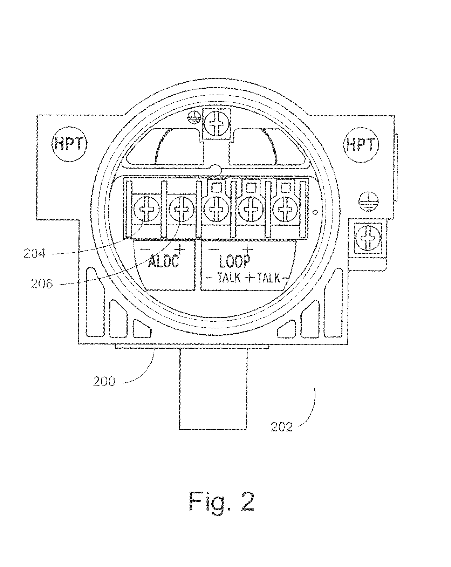

Fig. 2 is a view of representative electrical connections in a valve controller 200 that may be the same or similar to valve controller 100. The "loop" connections 202 are for connection of control inputs, such as 4-20 mA control signal. The signal input terminals 204 and 206, alternately known as auxiliary inputs, may be programmably set to trigger either an alert or a self-calibration routine when a signal is present at the signal input terminals 204 and 206. In one embodiment, the signal may be an impedance change between the terminals, such as a jumper placed across the signal input terminals 204, 206 which allows a known voltage or frequency at one input to be read at the other input. In another embodiment, rather than using a jumper, a switch (not depicted) may be mounted to the valve controller 200 that also allows shorting the signal input terminals 204 and 206 to each other. In yet another embodiment, an externally generated signal, such as a direct current voltage or alternating current waveform may be applied to one or both of the signal input terminals 204, 206.

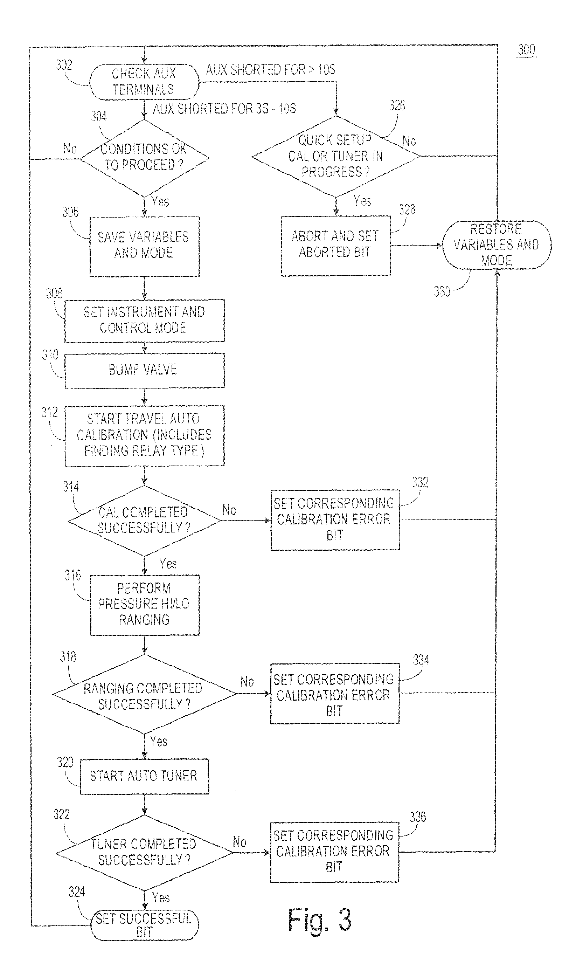

Fig. 3 is an illustration of a method 300 of initiating a self-calibration and tuning routine in a valve controller, such as valve controller 100 of Fig. 1. The method 300 illustrates one approach to determining if a signal or impedance change, such as a short-circuit, has been applied for a specified time range, such as 3 to 10 seconds, at which point a self-calibration routine may begin. For the purpose of the disclosure, a short-circuit will be considered a signal given that some bias voltage or other actual signal is transferred between signal input terminals 108 and 110 by application of the short-circuit.

Preliminarily in some embodiments, the signal or auxiliary input terminals 204 and 206 may be programmed by the valve controller 100 to a mode to receive a signal for activating the self calibration routine. This programming may occur at the time of manufacture, at installation, during a field maintenance session, or remotely via a HART, Profibus, or other protocol instruction received from a remote controller. In other embodiments, the auxiliary input terminals may only be used for initiating the self calibration routine.

At block 302, the auxiliary terminals 116, 118 may be checked to determine if a short or other signal is present for a predetermined interval, for example, 3-10 seconds. Determining if a short exists may involve checking the auxiliary terminals every 30-100 milliseconds (ms) to see if the short exists. When the short or other signal is detected, a timer may be started and used to determine if the short is removed within the predetermined time range. The processor 102 may continue to check for the short every 30-100 ms. If the short is removed during the predetermined interval, operation may continue at block 304.

At block 304, the processor may determine if conditions are appropriate for running a self-calibration routine. For example, a setting may be in place that blocks self-calibration. If a condition exists indicating that a self-calibration should not be executed, the 'no' branch is taken to block 302. If nothing is preventing self-calibration, the 'yes' branch from block 304 may be taken to block 306.

At block 306, the current operating mode settings and system variables may be saved. These values may be used to restore the current state if any part of the self calibration fails or is manually aborted. Operation may continue at block 308 and the routines for calibration may be loaded and executed.

At block 310, the valve may be bumped, that is briefly moved back and forth, as an indication that the self-calibration routine has begun.

At block 312, the relay type may be determined and the self-calibration for valve/actuator travel may be performed. The relay type has to do with whether the valve controller actively drives the actuator in both directions, if the actuator is driven in one direction or the other with a spring return, etc. Various relay types are known in the industry. Travel calibration may involve driving the actuator 136 until either the actuator or the valve 134 reaches the limit of its travel. The fully opened and closed positions may be noted and saved.

At block 314, if the travel calibration completes successfully, the 'yes' branch from block 314 may be taken to block 316.

At block 316, an additional calibration may optionally be performed. Pressure ranging calibration involves positioning the valve at 1 % and 99% of its travel and noting the pressure those travel positions. The high and low points of output pressure may be saved and used when the valve is operated in a pressure control mode.

If the ranging completes successfully, the 'yes' branch from block 318 may be taken to block 320.

At block 320, an automatic performance tuner may be executed. Performance tuning may be used in digital valve controller tuning. The tuning process involves moving the valve slightly and an monitoring the effects of small tuning changes to develop an optimum control response. Tuning may involve settings related to gain and feedback for valve responsiveness.

If the tuning completes successfully, the 'yes' branch from block 322 may be taken to block 324. At block 324 a flag or bit may be set indicating the successful conclusion of each of phase. A single success bit may be set or, in other embodiments, a success bit for each phase may be set.

In some embodiments, only one of two of the calibration phases may be performed, for example, when some phases are not appropriate for a certain operating mode or when explicitly programmed.

Returning to block 302, if the auxiliary terminals are shorted for greater than the predetermined interval, for example, greater than 10 seconds, operation may continue at block 326. If a calibration routine is already in progress, the 'yes' branch from block 326 may be taken and operation may continue at block 328 where the calibration routine may be aborted and an abort bit set for later polling. At block 330, the system variables and operating mode settings may be restored and operation continued at block 302.

If, at block 326, the calibration routine is not running, the 'no' branch from block 326 may be taken and operation may continue at block 302.

The embodiment illustrated in Fig. 3 illustrates that if any phase does not complete successfully, that phase's completion block may take the 'no' branch and blocks 332, 334, or 336 may be executed. At each block 332, 334, or 336 a respective error flag may be set and execution continued at block 330. At block 330, the variables and mode setting saved at block 306 may be restored and operation continued at block 302.

Other variations of the embodiment shown in Fig. 3 may allow execution of successive phases of calibration and tuning even if a prior phase does not complete successfully.

The ability to both start and stop self-calibration routine in a valve controller without the use of an external tool or remote programming provides an additional tool for use by a technician in the field. By avoiding an extensive built-in user-interface, the valve assembly including the valve controller could be provided at a lower cost and with fewer active components that may themselves require maintenance.

Although the foregoing text sets forth a detailed description of numerous different embodiments of the invention, it should be understood that the scope of the invention is defined by the words of the claims set forth at the end of this patent. The detailed description is to be construed as exemplary only and does not describe every possibly embodiment of the invention because describing every possible embodiment would be impractical, if not impossible. Numerous alternative embodiments could be implemented, using either current technology or technology developed after the filing date of this patent, which would still fall within the scope of the claims defining the invention.

Thus, many modifications and variations may be made in the techniques and structures described and illustrated herein without departing from the spirit and scope of the present invention. Accordingly, it should be understood that the methods and apparatus described herein are illustrative only and are not limiting upon the scope of the invention.

## Claims

1. A method (300) of performing a self-calibration routine in a valve controller (100) comprising:
providing the valve controller coupled to a valve (134);
determining when a short exists across a designated input (116, 118) of the valve controller for a first duration of more than a minimum time and less than a maximum time; and
executing the self-calibration routine including:
saving system variables and mode settings;
bumping the valve to indicate initiation of the self-calibration routine;
determining a relay type of the valve;
performing a valve travel calibration;
performing a pressure range calibration;
executing a performance tuner;
when the valve travel calibration, the pressure range calibration, and the performance tuner each complete successfully:
setting an indication of successful completion; and exiting the self-calibration routine;
when any of the valve travel calibration, the pressure range calibration, or the performance tuner do not complete successfully:
restoring the system variables and mode settings;
aborting the self-calibration routine; and
exiting the self-calibration routine.

2. The method of claim 1, further comprising:
determining when a second short across the designated input of a second duration is detected while the self-calibration routine is executing;
restoring system variables and mode settings; and
aborting the self-calibration routine.

3. The method of any of the preceding claims, further comprising setting the valve controller in a self-calibration mode to receive a signal at the designated input for activating the self- calibration routine.

4. The method of any of the preceding claims, wherein performing valve travel calibration comprises:
determining a first limit of valve travel or corresponding actuator travel to determine a first calibration point as part of the self-calibration routine; and
determining a second limit of valve travel or corresponding actuator travel to determine a second calibration point as part of the self-calibration routine.

5. The method of any of the preceding claims, wherein setting the valve controller in the mode to receive the signal for activating the self-calibration routine comprises selecting a self-calibration setting from a set of input settings including the self-calibration setting and an alarm input setting.

6. The method of any of the preceding claims, wherein the minimum time is approximately 3 seconds and the maximum time is approximately 10 seconds.

7. The method of any of the preceding claims, wherein the relay type is one of double acting/single acting, single-acting reverse, single-acting direct.

8. The method of any of the preceding claims, wherein determining when a short exists comprises testing for a short circuit at the designated input at an interval between tests of approximately 30 milliseconds to 100 milliseconds.

9. A valve controller (100) comprising:
a control input (106);
a processor (102) coupled to the control input;
a pneumatic input (122) for receiving a fluid under pressure;
a pneumatic control (120), coupled to the pneumatic input and the processor;
a pneumatic output (124), coupled to the pneumatic control that connects to a valve actuator (136);
a sensor input (128) coupled to at least one sensor that indicates valve position or actuator position;
a signal input (114) that receives a signal programmably selectable at the processor as a first indication of an external condition when programmed in a first mode and as a second indication to start the self-calibration routine of any of the preceding claims,
when in a second mode.

10. The valve controller of claim 9, wherein the signal at the signal input is interpreted at the processor as a self-calibration abort signal when the valve controller is already performing the self-calibration routine and is operating in the second mode.

11. The valve controller of claim 9 or 10, wherein the signal is a short circuit applied between two input terminals (116, 118) of the signal input.

12. The valve controller of claims 9 to 11, further comprising a timer (104) that is used to compare a duration of the signal at the signal input to a predetermined time window associated with starting the self-calibration routine.

13. The valve controller of claims 9 to 12, wherein the timer is used to compare the duration of the signal at the signal input to a second predetermined window associated with aborting the self-calibration routine after the self-calibration routine has started.

14. The valve controller of claims 9 to 13, wherein the predetermined time window is approximately 3-10 seconds after the timer starts and the second predetermined window is approximately 0.5 to 2.5 seconds after the timer is started after the self-calibration routine has started.

15. A method of operating the valve controller of any of claims 9 to 14, comprising:
providing the valve controller coupled to a valve (134);
determining when a short exists across a designated input of the valve controller for a first duration; and
executing a self-calibration routine responsive to determining when the short exists for the first duration, the self-calibration routine including:
saving system variables and mode settings;
bumping the valve to indicate initiation of the self-calibration routine;
determining a relay type of the valve;
determining a first limit of valve travel or corresponding actuator travel to resolve a first calibration point as part of the self-calibration routine; and
determining a second limit of valve travel or corresponding actuator travel to resolve a second calibration point as part of the self-calibration routine;
determining when a second short across the designated input of a second duration is detected while the self-calibration routine is executing;
restoring system variables and mode settings; and aborting the self-calibration routine.

16. The method of claim 15, further comprising:
performing a pressure range calibration;
executing a performance tuner.

17. The method of claim 15 or 16, wherein the first duration is 3 to 10 seconds.

18. The method of claims 15 to 17, wherein the second duration is 1 to 3 seconds.

## Patentansprüche

1. Verfahren (300) zum Durchführen einer Selbstkalibrierungsroutine in einer Ventilsteuerungseinheit (100), das umfasst:
Bereitstellen der Ventilsteuerungseinheit, die an ein Ventil (134) gekoppelt ist;
Bestimmen, wann ein Kurzschluss quer über einen bezeichneten Eingang (116, 118) der Ventilsteuerungseinheit während einer ersten Zeitdauer, die größer als eine Minimumzeitdauer und kleiner als eine Maximumzeitdauer ist, existiert; und
Ausführen der Selbstkalibrierungsroutine, die enthält:
Speichern der Systemvariablen und der Modus-Einstellungen;
Anstoßen des Ventils, um den Beginn der Selbstkalibrierungsroutine anzuzeigen;
Bestimmen eines Relaistyps des Ventils;
Durchführen einer Kalibrierung des Ventilhubs (Hubabgleich);
Durchführen einer Kalibrierung des Druckbereichs;
Ausführen einer Abstimmvorrichtung der Leistung;
dann, wenn die Kalibrierung des Ventilhubs, die Kalibrierung des Druckbereichs und die Abstimmvorrichtung der Leistung jeweils erfolgreich abschließen:
Festsetzen einer Angabe einer erfolgreichen Vollendung; und
Verlassen der Selbstkalibrierungsroutine;
dann, wenn die Kalibrierung des Ventilhubs und/oder die Kalibrierung des Druckbereichs und/oder die Abstimmvorrichtung der Leistung nicht erfolgreich abschließen:
Wiederherstellen der Systemvariablen und der Modus-Einstellungen;
Abbrechen der Selbstkalibrierungsroutine; und
Verlassen der Selbstkalibrierungsroutine.

2. Verfahren nach Anspruch 1, das ferner umfasst:
Bestimmen, wann ein zweiter Kurzschluss quer über den bezeichneten Eingang während einer zweiten Zeitdauer detektiert wird, während die Selbstkalibrierungsroutine ausgeführt wird;
Wiederherstellen der Systemvariablen und der Modus-Einstellungen; und
Abbrechen der Selbstkalibrierungsroutine.

3. Verfahren nach einem der vorhergehenden Ansprüche, das ferner ein Einstellen der Ventilsteuerungseinheit in einem Selbstkalibrierungs-Modus umfasst, um ein Signal an dem bezeichneten Eingang zum Aktivieren der Selbstkalibrierungsroutine zu empfangen.

4. Verfahren nach einem der vorhergehenden Ansprüche, wobei das Durchführen einer Kalibrierung des Ventilhubs umfasst:
Bestimmen einer ersten Grenze des Ventilhubs oder eines entsprechenden Betätigerwegs (Hub), um einen ersten Kalibrierungspunkt als Teil der Selbstkalibrierungsroutine zu bestimmen; und
Bestimmen einer zweiten Grenze des Ventilhubs oder eines entsprechenden Betätigerwegs (Hub), um einen zweiten Kalibrierungspunkt als Teil der Selbstkalibrierungsroutine zu bestimmen.

5. Verfahren nach einem der vorhergehenden Ansprüche, wobei das Einstellen der Ventilsteuerungseinheit in den Modus, um das Signal zum Aktivieren der Selbstkalibrierungsroutine zu empfangen, ein Auswählen einer Selbstkalibrierungseinstellung aus einem Satz von Eingangseinstellungen, die die Selbstkalibrierungseinstellung und eine Alarmeingangseinstellung enthalten, umfasst.

6. Verfahren nach einem der vorhergehenden Ansprüche, wobei die Minimumzeitdauer annähernd 3 Sekunden und die maximale Zeitdauer annähernd 10 Sekunden beträgt.

7. Verfahren nach einem der vorhergehenden Ansprüche, wobei der Relaistyp ein doppeltwirkender/einfachwirkender oder ein umgekehrt einfachwirkender oder ein direkt einfachwirkender Typ ist.

8. Verfahren nach einem der vorhergehenden Ansprüche, wobei ein Bestimmen, wann ein Kurzschluss existiert, ein Testen für einen Kurzschluss an dem bezeichneten Eingang in einem Intervall zwischen Tests von annähernd 30 Millisekunden bis 100 Millisekunden umfasst.

9. Ventilsteuerungseinheit (100), die umfasst:
einen Steuereingang (106);
einen Prozessor (102), der an den Steuereingang gekoppelt ist;
einen pneumatischen Eingang (122), um ein Fluid unter Druck zu empfangen;
eine pneumatische Steuerung (120), die an den pneumatischen Eingang und den Prozessor gekoppelt ist;
einen pneumatischen Ausgang (124), der an die pneumatischen Steuerung gekoppelt ist, die mit einem Betätigungsventil (136) verbindet;
einen Sensoreingang (128), der an mindestens einen Sensor gekoppelt ist, der die Ventilposition oder die Position einer Betätigungsvorrichtung angibt;
einen Signaleingang (114), der ein an dem Prozessor programmierbar auswählbares Signal dann, wenn es in einem ersten Modus programmiert ist, als eine erste Angabe einer äußeren Bedingung empfängt, und dann, wenn es in einem zweiten Modus programmiert ist, als eine zweite Angabe empfängt, um die Selbstkalibrierungsroutine nach einem der vorhergehenden Ansprüche zu starten.

10. Ventilsteuerungseinheit nach Anspruch 9, wobei das Signal an dem Signaleingang an dem Prozessor als ein Signal für den Abbruch der Selbstkalibrierung interpretiert wird, wenn die Ventilsteuerungseinheit die Selbstkalibrierungsroutine schon durchführt und schon in dem zweiten Modus betrieben wird.

11. Ventilsteuerungseinheit nach Anspruch 9 oder 10, wobei das Signal ein Kurzschluss ist, der zwischen zwei Eingangsanschlüssen (116, 118) des Signaleingangs angelegt ist

12. Ventilsteuerungseinheit nach einem der Ansprüche 9 bis 11, die ferner einen Zeitschalter (104) umfasst, der verwendet wird, um eine Dauer des Signals an dem Signaleingang mit einem vorgegebenen Zeitfenster zu vergleichen, das mit dem Starten der Selbstkalibrierungsroutine verbunden ist.

13. Ventilsteuerungseinheit nach einem der Ansprüche 9 bis 12, wobei der Zeitschalter dazu verwendet wird, die Dauer des Signals an dem Signaleingang mit einem zweiten vorgegebenen Fenster zu vergleichen, das mit dem Abbrechen der Selbstkalibrierungsroutine verbunden ist, nachdem die Selbstkalibrierungsroutine gestartet worden ist.

14. Ventilsteuerungseinheit nach einem der Ansprüche 9 bis 13, wobei das vorgegebene Zeitfenster annähernd 3 bis 10 Sekunden beträgt, nachdem der Zeitschalter startet, und das zweite vorgegebene Fenster annähernd 0,5 bis 2,5 Sekunden beträgt, nachdem der Zeitschalter gestartet ist, nachdem die Selbstkalibrierungsroutine gestartet worden ist.

15. Verfahren zum Betreiben der Ventilsteuerungseinheit nach einem der Ansprüche 9 bis 14, das umfasst:
Bereitstellen der Ventilsteuerungseinheit, die an ein Ventil (134) gekoppelt ist;
Bestimmen, wann ein Kurzschluss quer über einen bezeichneten Eingang der Ventilsteuerungseinheit während einer ersten Zeitdauer existiert; und
Ausführen einer Selbstkalibrierungsroutine, die auf das Bestimmen, wann der Kurzschluss während der ersten Zeitdauer existiert, reagiert, wobei die Selbstkalibrierungsroutine enthält:
Speichern der Systemvariablen und der Modus-Einstellungen;
Anstoßen des Ventils, um den Beginn der Selbstkalibrierungsroutine anzuzeigen;
Bestimmen eines Relaistyps des Ventils;
Bestimmen einer ersten Grenze des Ventilhubs oder eines entsprechenden Betätigerwegs (Hub), um einen ersten Kalibrierungspunkt als Teil der Selbstkalibrierungsroutine aufzulösen; und
Bestimmen einer zweiten Grenze des Ventilhubs oder eines entsprechenden Betätigerwegs (Hub), um einen zweiten Kalibrierungspunkt als Teil der Selbstkalibrierungsroutine aufzulösen;
Bestimmen, wann ein zweiter Kurzschluss quer über den bezeichneten Eingang während einer zweiten Zeitdauer detektiert wird, während die Selbstkalibrierungsroutine ausgeführt wird;
Wiederherstellen der Systemvariablen und der Modus-Einstellungen; und
Abbrechen der Selbstkalibrierungsroutine.

16. Verfahren nach Anspruch 15, das ferner umfasst:
Durchführen einer Kalibrierung eines Druckbereichs;
Ausführen einer Abstimmvorrichtung der Leistung.

17. Verfahren nach Anspruch 15 oder 16, wobei die erste Zeitdauer 3 bis 10 Sekunden beträgt.

18. Verfahren nach einem der vorhergehenden Ansprüche 15 bis 17, wobei die zweite Zeitdauer 1 bis 3 Sekunden beträgt.

## Revendications

1. Procédé (300) pour effectuer une routine d'étalonnage automatique dans une unité de commande de vanne (100), comprenant les étapes consistant à :
procurer l'unité de commande de vanne, couplée à une vanne (134) ;
déterminer si un court-circuit existe aux bornes d'une entrée désignée (116, 118) de l'unité de commande de vanne pendant une première durée supérieure à un temps minimal et inférieure à un temps maximal ; et
exécuter la routine d'étalonnage automatique, notamment :
enregistrer des variables système et des paramétrages de mode ;
secouer la vanne pour indiquer le lancement de la routine d'étalonnage automatique ;
déterminer un type de relais de la vanne ;
effectuer un étalonnage de course de la vanne ;
effectuer un étalonnage de plage de pression ;
exécuter un programme d'ajustement des performances ;
en cas de réussite de l'étalonnage de course de la vanne, de l'étalonnage de plage de pression et du programme d'ajustement des performances :
instaurer une indication de réussite ; et
quitter la routine d'étalonnage automatique ;
en cas d'échec de l'étalonnage de course de la vanne ou de l'étalonnage de plage de pression ou du programme d'ajustement des performances :
restaurer les variables système et les paramétrages de mode ;
abandonner la routine d'étalonnage automatique ; et
quitter la routine d'étalonnage automatique.

2. Procédé selon la revendication 1, comprenant en outre les étapes consistant à :
déterminer si un deuxième court-circuit d'une deuxième durée aux bornes de l'entrée désignée est détecté au cours de l'exécution de la routine d'étalonnage automatique ;
restaurer les variables système et les paramétrages de mode ; et
abandonner la routine d'étalonnage automatique.

3. Procédé selon l'une quelconque des revendications précédentes, comprenant en outre l'étape consistant à placer l'unité de commande de vanne dans un mode d'étalonnage automatique pour recevoir un signal au niveau de l'entrée désignée destiné à activer la routine d'étalonnage automatique.

4. Procédé selon l'une quelconque des revendications précédentes, dans lequel l'étape consistant à effectuer l'étalonnage de course de la vanne comprend les étapes consistant à :
déterminer une première limite de course de la vanne ou de course d'un actionneur correspondant dans le but de déterminer un premier point d'étalonnage dans le cadre de la routine d'étalonnage automatique ; et déterminer une deuxième limite de course de la vanne ou de course d'un actionneur correspondant dans le but de déterminer un deuxième point d'étalonnage dans le cadre de la routine d'étalonnage automatique.

5. Procédé selon l'une quelconque des revendications précédentes, dans lequel l'étape consistant à placer l'unité de commande de vanne dans le mode pour recevoir le signal destiné à activer la routine d'étalonnage automatique comprend l'étape consistant à sélectionner un paramétrage d'étalonnage automatique parmi un ensemble de paramétrages d'entrée comprenant un paramétrage d'étalonnage automatique et un paramétrage d'entrée d'alarme.

6. Procédé selon l'une quelconque des revendications précédentes, dans lequel le temps minimal est d'environ 3 secondes et le temps maximal est d'environ 10 secondes.

7. Procédé selon l'une quelconque des revendications précédentes, dans lequel le type de relais est choisi parmi un type à double effet/simple effet, un type à simple effet inverse et un type à simple effet direct.

8. Procédé selon l'une quelconque des revendications précédentes, dans lequel l'étape consistant à déterminer si un court-circuit existe comprend l'étape consistant à tester la présence éventuelle d'un court-circuit au niveau de l'entrée désignée à un intervalle entre tests compris entre environ 30 millisecondes et 100 millisecondes.

9. Unité de commande de vanne (100), comprenant :
une entrée de commande (106) ;
un processeur (102) couplé à l'entrée de commande ;
une entrée pneumatique (122) destinée à recevoir un fluide sous pression ;
une commande pneumatique (120) couplée à l'entrée pneumatique et au processeur ;
une sortie pneumatique (124) couplée à la commande pneumatique, reliée à un actionneur de vanne (136) ;
une entrée de capteur (128) couplée à au moins un capteur, indiquant une position de la vanne ou une position d'un actionneur ;
une entrée de signal (114) recevant un signal sélectionnable de façon programmable au niveau du processeur comme une première indication d'une condition externe si elle est programmée dans un premier mode, et comme une deuxième indication pour lancer la routine d'étalonnage automatique selon l'une quelconque des revendications précédentes si elle se trouve dans un deuxième mode.

10. Unité de commande de vanne selon la revendication 9, dans laquelle le signal au niveau de l'entrée de signal est interprété au niveau du processeur comme un signal d'abandon d'étalonnage automatique si l'unité de commande de vanne est déjà en train d'effectuer la routine d'étalonnage automatique et fonctionne dans le deuxième mode.

11. Unité de commande de vanne selon les revendications 9 ou 10, dans laquelle le signal est un court-circuit appliqué entre deux bornes d'entrée (116, 118) de l'entrée de signal.

12. Unité de commande de vanne selon l'une quelconque des revendications 9 à 11, comprenant en outre une minuterie (104) servant à comparer une durée du signal au niveau de l'entrée de signal à une fenêtre temporelle prédéfinie associée au lancement de la routine d'étalonnage automatique.

13. Unité de commande de vanne selon l'une quelconque des revendications 9 à 12, dans laquelle la minuterie sert à comparer la durée du signal au niveau de l'entrée de signal à une deuxième fenêtre prédéfinie associée à l'abandon de la routine d'étalonnage automatique après le lancement de la routine d'étalonnage automatique.

14. Unité de commande de vanne selon l'une quelconque des revendications 9 à 13, dans laquelle la fenêtre temporelle prédéfinie est d'environ 3 à 10 secondes après le déclenchement de la minuterie et la deuxième fenêtre prédéfinie est d'environ 0,5 à 2,5 secondes après le déclenchement de la minuterie après le lancement de la routine d'étalonnage automatique.

15. Procédé pour faire fonctionner l'unité de commande de vanne selon l'une quelconque des revendications 9 à 14, comprenant les étapes consistant à :
procurer l'unité de commande de vanne, couplée à une vanne (134) ;
déterminer si un court-circuit existe aux bornes d'une entrée désignée de l'unité de commande de vanne pendant une première durée ; et
exécuter une routine d'étalonnage automatique, s'il est déterminé que le court-circuit existe pendant la première durée, la routine d'étalonnage automatique consistant à :
enregistrer des variables système et des paramétrages de mode ;
secouer la vanne pour indiquer le lancement de la routine d'étalonnage automatique ;
déterminer un type de relais de la vanne ;
déterminer une première limite de course de la vanne ou de course d'un actionneur correspondant dans le but de résoudre un premier point d'étalonnage dans le cadre de la routine d'étalonnage automatique ; et
déterminer une deuxième limite de course de la vanne ou de course d'un actionneur correspondant dans le but de résoudre un deuxième point d'étalonnage dans le cadre de la routine d'étalonnage automatique ;
déterminer si un deuxième court-circuit d'une deuxième durée aux bornes de l'entrée désignée est détecté au cours de l'exécution de la routine d'étalonnage automatique ;
restaurer les variables système et les paramétrages de mode ; et
abandonner la routine d'étalonnage automatique.

16. Procédé selon la revendication 15, comprenant en outre les étapes consistant à :
effectuer un étalonnage de plage de pression ;
exécuter un programme d'ajustement des performances.

17. Procédé selon les revendications 15 ou 16, dans lequel la première durée est comprise entre 3 et 10 secondes.

18. Procédé selon l'une quelconque des revendications précédentes 15 à 17, dans lequel la deuxième durée est comprise entre 1 et 3 secondes.
